(19) **Europäisches Patentamt**

**European Patent Office**

**Office européen des brevets**

(11)   **EP 1 525 557 B1**

(12)   **EUROPEAN PATENT SPECIFICATION**

(45) Date of publication and mention
of the grant of the patent:
**27.09.2006  Bulletin 2006/39**

(51) Int Cl.:
***G06T 1/00*** (2006.01)

(21) Application number: **03740978.6**

(86) International application number:
**PCT/IB2003/003095**

(22) Date of filing: **07.07.2003**

(87) International publication number:
**WO 2004/010376 (29.01.2004 Gazette 2004/05)**

(54) **WATERMARK DETECTION**

WASSERZEICHENERKENNUNG

FILIGRANOSCOPIE

(84) Designated Contracting States:
**AT BE BG CH CY CZ DE DK EE ES FI FR GB GR
HU IE IT LI LU MC NL PT RO SE SI SK TR**

(30) Priority: **22.07.2002 EP 02077982**

(43) Date of publication of application:
**27.04.2005  Bulletin 2005/17**

(73) Proprietor: **Koninklijke Philips Electronics N.V.
5621 BA  Eindhoven (NL)**

(72) Inventors:
 • **BRUEKERS, Alphons, A., M., L.**
   **NL-5656 AA Eindhoven (NL)**
 • **HAITSMA, Jaap, A.**
   **NL-5656 AA Eindhoven (NL)**
 • **VAN DER VEEN, Minne**
   **NL-5656 AA Eindhoven (NL)**
 • **KALKER, Antonius, A., C., M.**
   **NL-5656 AA Eindhoven (NL)**

(74) Representative: **Schmitz, Herman Jan Renier
Philips
Intellectual Property & Standards
P.O. Box 220
5600 AE  Eindhoven (NL)**

(56) References cited:
**WO-A-00/79424**

 • **KALKER T ET AL: "Analysis of watermark
   detection using SPOMF" IMAGE PROCESSING,
   1999. ICIP 99. PROCEEDINGS. 1999
   INTERNATIONAL CONFERENCE ON KOBE,
   JAPAN 24-28 OCT. 1999, PISCATAWAY, NJ, USA,
   IEEE, US, 24 October 1999 (1999-10-24), pages
   316-319, XP010369137 ISBN: 0-7803-5467-2**
 • **WANG R K ET AL: "CORRELATION FILTER WITH
   A NOISE ADAPTIVE DISCRIMINANT
   CAPABILITY" OPTIK, WISSENSCHAFTLICHE
   VERLAG GMBH.STUTTGART, DE, vol. 99, no. 1,
   1 March 1995 (1995-03-01), pages 18-24,
   XP000507866 ISSN: 0030-4026**
 • **DEPOVERE G ET AL: "Improved watermark
   detection reliability using filtering before
   correlation" IMAGE PROCESSING, 1998. ICIP 98.
   PROCEEDINGS. 1998 INTERNATIONAL
   CONFERENCE ON CHICAGO, IL, USA 4-7 OCT.
   1998, LOS ALAMITOS, CA, USA,IEEE COMPUT.
   SOC, US, 4 October 1998 (1998-10-04), pages
   430-434, XP010308750 ISBN: 0-8186-8821-1**

## Description

FIELD OF THE INVENTION

The invention relates to a method and arrangement according to the preamble of claim 1 and 7 respectively.

BACKGROUND OF THE INVENTION

Watermarks are imperceptible messages embedded in the content of information signals such as audio or video. Watermarks support a variety of applications such as monitoring and copy control. A watermark is generally embedded in a signal by modifying samples of the signal according to respective samples of the watermark. The term "samples" refers to signal values in the domain in which the watermark is embedded.

The method and arrangement according to the preamble of claim 1 and 7 are disclosed by Kalkar T. et al: "Analysis of watermark detection using SPOMF Image Processing" 1999 ICEP 99. Proceedings pages 316-319. This article describes a method for reducing the standard deviation of the watermarked signal maintaining the small signal variations representing the watermark.

A prior art watermark embedding and detection system for audio is disclosed in Jaap Haitsma, Michiel van der Veen, Ton Kalker and Fons Bruekers: "Audio Watermarking for Monitoring and Copy Protection", ACM Multimedia Conference, October 30 - November 4, 2002, pp. 119-122. The audio signal is segmented into frames and transformed to the frequency domain. A watermark sequence is embedded in the magnitudes of the Fourier coefficients of each frame. The detector receives the time-domain version of the watermarked audio signal. The received signal is segmented into frames and transformed to the frequency domain. The magnitudes of the Fourier coefficients are cross-correlated with the watermark sequence. If the correlation exceeds a given threshold, the watermark is said to be present. The expression "sequence of signal samples" defined in the opening paragraph refers to the magnitudes of the Fourier coefficients of an audio frame in this case.

A prior-art watermark embedding and detection system for video is disclosed in Ton Kalker, Geert Depovere, Jaap Haitsma and Maurice Maes: "A Video watermarking System for Broadcast Monitoring", Proceedings of SPIE, Vo1.3657, January 1999, pp. 103-112. In this system, the watermark is embedded in the pixel domain. The watermark sequence is a $128 \times 128$ watermark pattern, which is tiled over an image. The watermark detector correlates $128 \times 128$ image blocks with the watermark pattern. If the correlation is sufficiently large, the watermark is said to be present. The expression "sequence of signal samples" defined in the opening paragraph refers to image blocks of $128 \times 128$ pixels in this case.

Watermark detection algorithms can be sensitive to attacks or specific signal conditions, such as a strong single tone present in or added to an audio signal, or a strong logo present on a fixed position in every video frame or white subtitle letters at the bottom of every frame.

OBJECT AND SUMMARY OF THE INVENTION

It is an object of the invention to improve the performance of the prior-art watermark detection method.

To this end, the method according to the invention is characterized in that the step of dividing the sequence of signal samples into sub-sequences comprises dividing into overlapping sub-sequences.

The invention is particularly effective if the watermark detection method includes accumulation of plural signal sequences. Such an accumulation normally improves the detection reliability (the watermark sequences add up whereas the signal is averaged), but this is no longer the case if the signal includes the same disturbing component in substantially all accumulated sequences. In a preferred embodiment of the method according to the invention, the pre-processing is applied to said accumulated sequences. It is thereby achieved that the disturbing component is effectively removed from the accumulated sequences.

In an advantageous embodiment of the method according to the invention, the overlapping sub-sequences of signal samples are windowed, sub-sequences. A suitable window is the well-known Hanning window, or the square root of the Hanning window. An overlap of 50% has been found to give good results. The concatenated sequence to be correlated with the watermark is obtained by adding the weighted sub-sequences.

Advantageously, the step of weighting comprises Fourier transforming the sub-sequence of signal samples, normalizing the magnitudes of the Fourier coefficients, and back-transforming the normalized coefficients. Alternatively, the step of weighting comprises dividing all signal samples of a sub-sequence by the largest signal sample of said sub-sequence. The second option, i.e. scaling, has a lower arithmetic complexity than the first option where weighting is obtained by normalizing the magnitudes in the frequency domain. In both embodiments, the sequence is adaptively weighted, based on properties of the signal.

BRIEF DESCRIPTION OF THE DRAWINGS

These and other aspects of the invention are apparent from and will be elucidated with reference to the accompanying drawings, in which:

Fig. 1 shows schematically a prior-art arrangement for embedding a watermark to provide background information about the watermark embedding process.
Fig. 2 shows schematically a preferred embodiment of an arrangement for detecting the watermark in accordance with the invention.
Fig. 3 shows graphs of correlation peak values for an audio signal to illustrate the performance of the method according to the invention.
Figs. 4-6 show diagrams to illustrate the operation of the watermark detection arrangement which is shown in Fig. 2.
Fig. 7 shows a further graph of correlation peak values to illustrate the performance of the watermark detection method according to the invention.

DESCRIPTION OF EMBODIMENTS

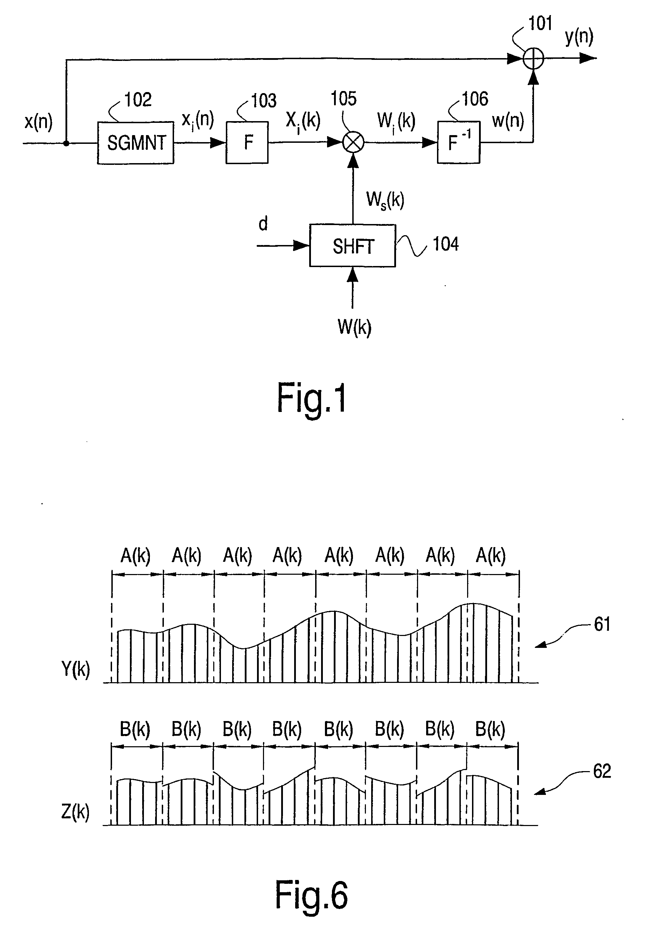

The invention will now be described with reference to the detection of a watermark embedded in an audio signal. An embedding arrangement will first be described to provide background information. Fig. 1 shows schematically such an arrangement. The arrangement receives an audio signal in the form of audio samples $x(n)$, and comprises an adder **101** for adding a watermark $w(n)$ to the signal. The dominant part of the watermark $w(n)$ is derived in the Fourier domain. The arrangement comprises a segmentation unit **102,** which segments the audio signal into frames or sequences of 2048 samples. The sequences are transformed using a Fourier transform **103.** A random watermark $W(k)$ in the frequency domain is drawn from a normal distribution with mean and standard deviation 0 and 1, respectively. The watermark $W(k)$ is cyclically shifted by an amount representing a 10-bit payload d in a shifting circuit **104.** The magnitudes of the Fourier coefficients are modified, by a multiplier **105,** in accordance with:

$$W_i(k) = W_s(k)X_i(k)$$

where i indicates the frame or sequence number, $X_i(k)$ the spectral representation of a frame $x_i(n)$, $W_s(k)$ the cyclically shifted version of $W(k)$, and $W_i(k)$ the resulting frequency domain watermark. An inverse Fourier transform **106** is used to obtain the time domain watermark representation $w(n)$.

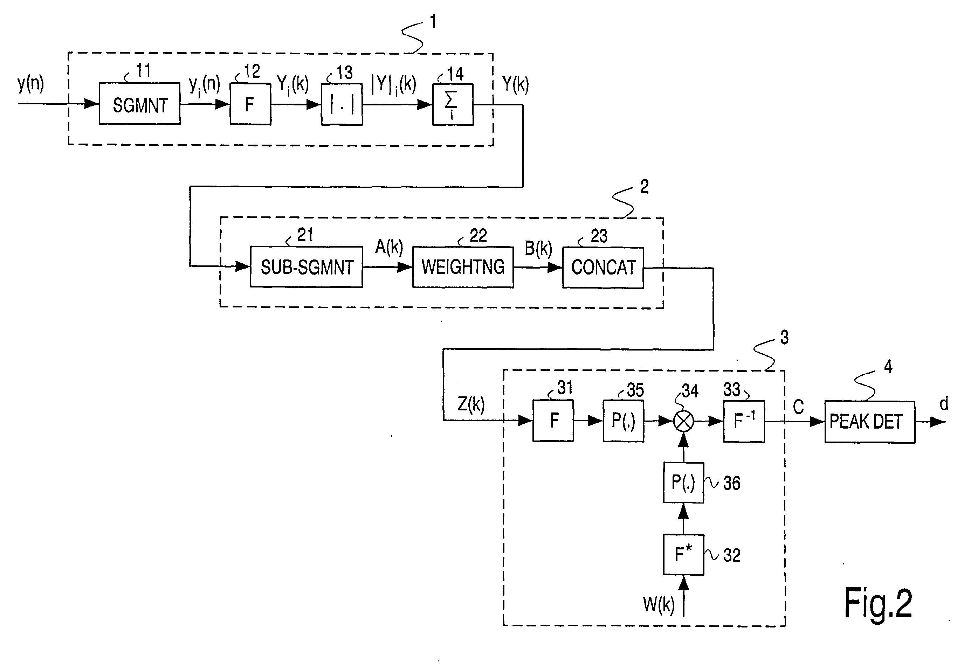

Fig. 2 shows schematically a preferred embodiment of an arrangement for detecting the watermark in accordance with the invention. As has been attempted to illustrate in this Figure, the arrangement comprises three main stages: accumulation **(1),** pre-processing **(2),** and correlation **(3).**

In a segmentation unit **11** of the accumulation stage, the arrangement segments the suspect audio signal $y(n)$ into frames or sequences $y_i(n)$ of 2048 audio samples. Each sequence is Fourier transformed **(12)** and the magnitudes of the Fourier coefficients $Y_i(k)$ are computed **(13).** The magnitudes of Fourier coefficients of frame i constitute a sequence $|Y|_i(k)$ of 1024 real numbers in which the watermark information has been embedded. In the preferred embodiment of the arrangement, a plurality of such sequences $|Y|_i(k)$ is accumulated, by an accumulator **14,** to obtain an accumulated sequence $Y(k)$. The number of sequences being accumulated is chosen to represent a period of, say, 2 seconds of the audio signal.

The correlation stage **3** will now briefly be described. For a detailed description of watermark detection using correlation, reference is made to International Patent Application WO 99/45707. The correlation stage calculates a correlation C between an accumulated sequence of signal samples (note that "signal samples" in this example refers to magnitudes of Fourier coefficients) and every possible shifted version of the watermark sequence $W(k)$. The correlation stage receives a sequence $Z(k)$. It will initially be assumed that the correlation stage receives the accumulated sequence directly from the accumulation stage **1,** i.e. $Z(k)=Y(k)$.

The cross-correlation for every possible shifted version of $W(k)$ is calculated most efficiently using the Fourier transform. The traditional cross-correlation may be written as:

$$C = F^{-1}(F(Z(k)) \times F^*(W(k)))$$

where $F(.)$ denotes the Fourier transform, $F^*(.)$ the Fourier transform including conjugation of the complex Fourier

coefficients, and $F^{-1}(.)$ the inverse Fourier transform. The respective transforms are carried out by Fourier transform circuits **31, 32** and **33** in Fig. 2. The multiplication is performed by a multiplier **34.**

The detection performance is enhanced by Symmetrical Phase Only Filtering (SPOMF). In this cross-correlation procedure, only phase information of the signals $F(Z(k))$ and $F^*(W(k))$ is used. The phase-only operation is defined as:

$$P(x) = \frac{x}{|x|} \text{ for } x \neq 0, \text{ and } P(0) = 1.$$

and is carried out by respective phase extraction circuits **35** and **36** in Fig. 2,

A peak detector **4** determines whether the cross-correlation function C exhibits a peak value $\rho$ which is larger than a given detection threshold (for example, $5\sigma$, where $\sigma$ is the standard deviation of the correlation function). In that case, the watermark $W(k)$ is said to be present. The peak detector also retrieves the position of said peak value, which corresponds to the amount of shift being applied to the watermark $W(k)$, and thus represents the 10-bit payload d. However, this aspect is not relevant to the invention.

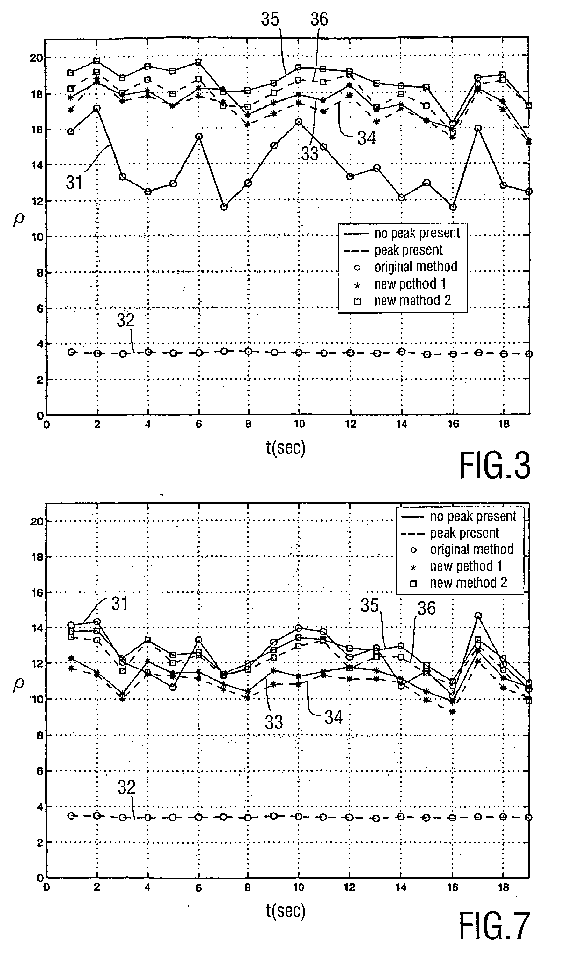

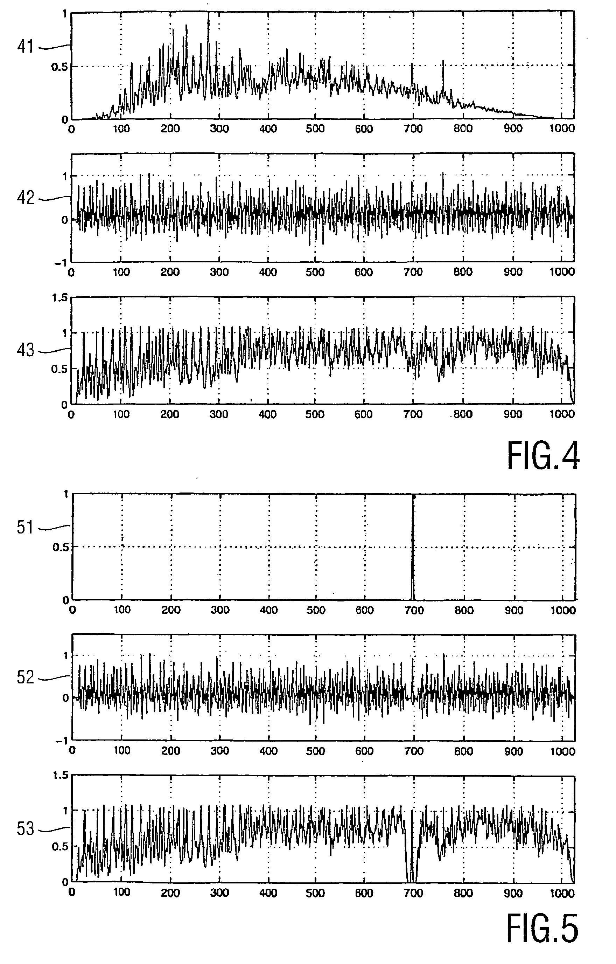

Fig. 3 shows graphs of correlation peak values $\rho$ measured at 1 second intervals of an audio signal. A solid line **31** denotes the result for a regular piece of music. As can easily be seen, each peak value clearly exceeds the threshold value $5\sigma$, i.e. the signal has an embedded watermark. A dashed line **32** denotes the peak values for the same piece of music, now being disturbed by a strong 15 kHz sine-wave. None of the peak values exceeds the threshold $5\sigma$ now. The detector will now erroneously determine that this signal has no embedded watermark. The problem is illustrated with reference to Figs. 4 and 5. In Fig. 4, numeral **41** denotes a typical accumulated sequence $Y(k)$ derived from a regular piece of music. In Fig. 5, numeral **51** denotes the corresponding sequence $Y(k)$ derived from the same but disturbed piece of music. The 15 kHz tone dominates the signal such that the variations in magnitudes of the Fourier components in sequence **51**, which carry the watermark information, shrink to insignificance compared to the variations in sequence **41.**

A possible solution to overcome the problem is to ignore parts of the signals, for example: parts of video frames or parts of the audio spectrum, where the disturbing components are present. For example, the location of a logo in a video signal may be known in advance, so that the corresponding pixels can be ignored. Or, if an audio watermark detector is observing an FM radio station, the frequencies close to the carrier wave can be ignored. Ignoring parts of a signal can be seen as applying a more or less abrupt weighting function to the signal. However, the location of disturbing components is generally unknown. Some kind of mechanism is desired to adapt the weighting function to the signal.

To this end, the arrangement for detecting the watermark in accordance with the invention includes a pre-processing stage **2** between accumulation stage **1** and correlation stage **3** (cf. Fig. 2). The pre-processing stage includes a sub-segmentation unit **21**, a weighting circuit **22,** and a concatenation circuit **23.**

The sub-segmentation unit **21** divides the accumulated sequence $Y(k)$ into a plurality of possibly overlapping and windowed sub-sequences $A(k)$. For audio signals, where the sequence $Y(k)$ comprises 1024 signal samples, a sub-sequence length of 16 samples has been found to be a good choice.

The weighting circuit **22** subjects each individual sub-sequence to a weighting function. The weighting function is chosen to be such that the distribution of the signal samples over the whole sequence is substantially flat while the original variations of signal samples within each sub-sequence are retained. The expression "substantially flat" may mean, for example, that the mean value of the signal samples of a sub-sequences is the same for all the sub-sequences.

In one embodiment, this is achieved by normalizing the magnitudes of each sub-sequence in the frequency domain. To this end, the weighting circuit performs the following operation:

$$B(k) = F^{-1}(P(F(A(k)))) \tag{1}$$

where $F(.)$ denotes the Fourier transform, $P(.)$ denotes the phase only operation as defined above, and $F^{-1}(.)$ denotes the inverse Fourier transform.

In another embodiment, the weighting is carried out by the following scaling operation:

$$B_k = \frac{A_k}{\max(|A_k|)} \tag{2}$$

where $A_k$ and $B_k$ denote samples of the original sub-sequence $A(k)$ and the weighted sub-sequence $B(k)$, respectively,

and $|A_k|$ is the largest absolute value of the signal samples of sub-sequence A(k).

The weighted sub-sequences B(k) are subsequently concatenated by the concatenation circuit **23,** to obtain the pre-processed sequence Z(k). If the sub-sequences overlap each other, suitable windows (e.g. Hanning windows) are preferably applied on B(k). It is the pre-processed sequence Z(k) that is input to the correlation stage **2.**

Fig. 6 shows diagrams to schematically illustrate the pre-processing operation. Reference numeral **61** denotes an accumulated sequence Y(k) being divided into sub-sequences A(k). Reference numeral **62** denotes the sequence Z(k) being obtained by concatenating weighted sub-sequences B(k). As has been attempted to show, each sub-sequence A(k) has been weighted. The same weighting factor has been applied to all signal samples of a sub-sequence, but different weighting factors have been applied to different sub-sequences. The result is a flatter distribution of signal samples while the variations in signal samples is locally retained.

Figs. 4 and 5 illustrate the effect of the pre-processing stage **2** for a particular piece of music in practice. As already mentioned above, numeral **41** in Fig. 4 denotes an accumulated sequence Y(k) derived from a regular piece of music. Numeral **51** in Fig. 5 denotes the accumulated sequence Y(k) derived from the same piece of music being disturbed by a strong 15 kHz tone. The sequences comprise 1024 accumulated signal samples. Reference numerals **42** and **52** denote the corresponding weighted sequences Z(k) obtained by normalizing the magnitudes of each sub-sequence in the frequency domain as defined by equation (1). Reference numerals **43** and **53** denote the corresponding weighted sequences Z(k) obtained by scaling as defined by equation (2). For both pieces of music, but particularly for the disturbed piece of music, the diagrams indicate that a significantly larger correlation peak can be expected to be detected by the correlation stage.

The improvement achieved with the watermark detection method according to the invention is shown in Fig. 3. In this Figure, solid lines refer to the regular piece of music and dashed lines refer to the disturbed piece of music. Solid line **31** and dashed line **32** have already been discussed before. Solid lines **33** and **35** show the performance of the weighting operation in accordance with equation (1). Dashed lines **34** and **36** show the performance of the weighting operation in accordance with equation (2). As can easily be seen, all the peak correlation values lie above the threshold $5\sigma$ used by the peak detector **4.** For completeness, Fig. 7 shows the same graphs with identical legends and reference numerals for the same piece of music but now being mp3 encoded and subsequently decoded.

In the embodiments described above, the watermark is represented by slight modifications of the magnitudes of Fourier coefficients, i.e. in the frequency domain. However, it will be appreciated that the invention is equally applicable to detection of a watermark being embedded in the temporal or spatial (video) domain.

A watermark detection method is disclosed which is based on computing the cross-correlation between a suspect signal and a watermark. In order to be more robust against prolonged dominant signal components that adversely affect the correlation, the sequence of signal samples (61) to be correlated with the watermark is divided into sub-sequences (A(k)). The sub-sequences are processed, by a weighting function, to obtain modified sub-sequences (B(k)) that individually exhibit the original signal variations, but collectively (62) exhibit a flatter distribution of sample values. Dominant peaks in the signal are thereby substantially reduced.

**Claims**

1.  A method of detecting a watermark in a signal, the method comprising the steps of computing (3) a correlation between a sequence of signal samples and a predetermined watermark, and detecting (4) whether said correlation exceeds a given threshold, the method including pre-processing (2) of said sequence of signal samples, said pre-processing comprising the steps of:

    - dividing (21) the sequence of signal samples into sub-sequences;
    - subjecting (22) all signal samples of a sub-sequence to the same weighting, and varying said weighting from sub-sequence to sub-sequence to obtain a distribution of signal samples over the sequence that is flatter than the distribution of signal samples over the sequence before preprocessing, while retaining the original variations of signal samples in each subsequence; and
    - concatenating (23) the weighted sub-sequences to obtain the pre-processed sequence of signal samples,

    **characterized in that** said step of dividing the sequence of signal samples into sub-sequences comprises dividing into overlapping sub-sequences.

2.  The method as claimed in claim 1, further including the step of accumulating (1) a plurality of sequences of signal samples prior to correlation, **characterized in that** said pre-processing is applied to said accumulated sequences.

3.  The method as claimed in claim 1, wherein said overlap is 50%.

**4.** The method as claimed in claim 1, wherein said step of dividing into overlapping sub-sequences includes applying a window function to said overlapping sub-sequences.

**5.** The method as claimed in claim 1, wherein said step of weighting comprises Fourier transforming the sub-sequence of signal samples, normalizing the magnitudes of the Fourier coefficients, and back-transforming the normalized coefficients.

**6.** The method as claimed in claim 1, wherein said step of weighting comprises dividing all signal samples of a sub-sequence by the largest signal sample of said sub-sequence.

**7.** An arrangement for detecting a watermark in a signal, the arrangement comprising computing means (3) for computing a correlation between a sequence of signal samples and a predetermined watermark, and thresholding means (4) for detecting whether said correlation exceeds a given threshold, the arrangement including pre-processing means (2) for pre-processing said sequence of signal samples, said pre-processing means comprising:

- dividing means (21) for dividing the sequence of signal samples into sub-sequences;
- weighting means (22) for subjecting all signal samples of a sub-sequence to the same weighting, and varying said weighting from sub-sequence to sub-sequence to obtain a distribution of signal samples over the sequence that is flatter than the distribution of signal samples over the sequence before preprocessing, while retaining the original variations of signal samples in each sub-sequence; and;
- concatenating (23) means for concatenating the weighted sub-sequences to obtain the pre-processed sequence of signal samples,
- **characterized in that** the dividing means (21) are arranged to divide the sequence of original signal samples into overlapping sub-sequences.

**8.** A computer program product arranged to cause a computer executing said computer program to carry out the method as claimed in any one of claims 1 to 6.

**Patentansprüche**

**1.** Verfahren zum Detektieren eines Wasserzeichens in einem Signal, wobei das Verfahren die nachfolgenden Verfahrensschritte umfasst: das Berechnen (3) einer Korrelation zwischen einer Sequenz von Signalabtastwerten und einem vorbestimmten Wasserzeichen, und das Detektieren (4), ob die genannte Korrelation eine bestimmte Schwelle übersteigt, wobei das Verfahren die Vorverarbeitung (2) der genannten Sequenz von Signalabtastwerten umfasst, wobei die Vorverarbeitung die nachfolgenden Schritte umfasst:

- das Aufteilen (21) der Signale der Signalabtastwerte in Subsequenzen;
- der Vorgang, dass alle Signalabtastwerte einer Subsequenz der gleichen Gewichtung ausgesetzt (22) werden, und dass die genannte Gewichtung von Subsequenz zu Subsequenz variiert wird um eine Verteilung der Signalabtastwerte über diejenige Sequenz zu erhalten, die flacher ist als die Verteilung der Signalabtastwerte über die Sequenz vor der Vorverarbeitung, während die ursprünglichen Variationen von Signalabtastwerten in jeder Subsequenz beibehalten werden; und
- das Verketten (23) der gewichteten Subsequenzen zum Erhalten der vorverarbeiteten Sequenz von Signalabtastwerten,

**dadurch gekennzeichnet, dass** der genannte Schritt der Verteilung der Sequenz von Signalabtastwerten in Subsequenzen das Aufteilen in überlappende Subsequenzen umfasst.

**2.** Verfahren nach Anspruch 1, das weiterhin den Schritt der Akkumulierung (1) einer Anzahl Sequenzen von Signalabtastwerten vor der Korrelation aufweist, **dadurch gekennzeichnet, dass** die genannte Vorverarbeitung auf die genannten akkumulierten Sequenzen angewandt wird.

**3.** Verfahren nach Anspruch 1, wobei die genannte Überlappung 50% beträgt.

**4.** Verfahren nach Anspruch 1, wobei der genannte Schritt der Aufteilung in überlappende Subsequenzen das Anwenden einer Fensterfunktion auf die genannten überlappenden Sequenzen umfasst.

**5.** Verfahren nach Anspruch 1, wobei der genannte Schritt der Gewichtung eine Fourier-Transformation der Subsequenz von Signalabtastwerten, eine Normalisierung der Fourier-Koeffizienten und eine Rücktransformation der normalisierten Koeffizienten umfasst.

**6.** Verfahren nach Anspruch 1, wobei der genannte Gewichtungsschritt das Teilen aller Signalabtastwerte einer Subsequenz durch den größten Signalabtastwert der genannten Subsequenz umfasst.

**7.** Anordnung zum Detektieren eines Wasserzeichens in einem Signal, wobei die Anordnung Rechenmittel (3) aufweist zum Berechnen einer Korrelation zwischen einer Sequenz von Signalabtastwerten und einem vorbestimmten Wasserzeichen, und Schwellenmittel (4) um zu detektieren, ob die genannte Korrelation eine bestimmte Schwelle übersteigt, wobei die Anordnung Vorverarbeitungsmittel (2) aufweist zum Vorverarbeiten der genannten Sequenz von Signalabtastwerten, wobei die genannten Vorverarbeitungsmittel Folgendes umfassen:

- Teilungsmittel (21) um die Sequenz von Signalabtastwerten in Subsequenzen aufzuteilen,
- Gewichtungsmittel (22) um alle Signalabtastwerte einer Subsequenz der gleichen Gewichtung auszusetzen, und um die genannte Gewichtung von Subsequenz zu Subsequenz zu variieren um eine Verteilung der Signalabtastwerte über die Sequenz zu erhalten, die flacher ist als die Verteilung von Signalabtastwerten über die Sequenz vor der Vorverarbeitung, wobei die ursprünglichen Variationen der Abtastwerte in jeder Subsequenz beibehalten wird; und
- Verkettungsmittel (23) zum Verketten der gewichteten Subsequenzen zum Erhalten der vorverarbeiteten Sequenz von Abtastwerten,

**dadurch gekennzeichnet, dass** die Teilungsmittel (21) dazu vorgesehen sind, die Sequenz von ursprünglichen Signalabtastwerten in sich überlappende Subsequenzen zu verteilen.

**8.** Computerprogrammprodukt, vorgesehen um dafür zu sorgen, dass ein Computer das genannte Computerprogramm durchführt um das Verfahren nach einem der Ansprüche 1 bis 6 durchzuführen.

## Revendications

**1.** Procédé de détection d'un filigrane dans un signal, le procédé comprenant les étapes de calcul (3) d'une corrélation entre une séquence d'échantillons de signal et un filigrane prédéterminé, et de détection (4) du fait que ladite corrélation dépasse ou non un seuil, le procédé comprenant le pré-traitement (2) de ladite séquence d'échantillons de signal, ledit pré-traitement comprenant les étapes de :

- division (21) de la séquence d'échantillons de signal en des sous-séquences;
- soumission (22) de tous les échantillons de signal d'une sous-séquence à la même pondération, et application d'une variation à ladite pondération d'une sous-séquence à l'autre pour obtenir sur la séquence une distribution d'échantillons de signal sur la séquence qui est plus plane que la distribution d'échantillons de signal avant le pré-traitement, tout en conservant les variations originales d'échantillons de signal dans chaque sous-séquence ; et
- concaténation (23) des sous-séquences pondérées pour obtenir la séquence pré-traitée d'échantillons de signal,

**caractérisé en ce que** ladite étape de division de la séquence d'échantillons de signal en des sous-séquences comprend la division en des sous-séquences se chevauchant.

**2.** Procédé selon la revendication 1, comprenant en outre l'étape d'accumulation (1) d'une pluralité de séquences d'échantillons de signal avant la corrélation, **caractérisé en ce que** ledit pré-traitement est appliqué auxdites séquences accumulées.

**3.** Procédé selon la revendication 1, dans lequel ledit chevauchement est de 50%.

**4.** Procédé selon la revendication 1, dans lequel ladite étape de division en des sous-séquences se chevauchant comprend l'application d'une fonction de fenêtre auxdites sous-séquences se chevauchant.

**5.** Procédé selon la revendication 1, dans lequel ladite étape de pondération comprend la transformation de Fourier de la sous-séquence d'échantillons de signal, la normalisation des amplitudes des coefficients de Fourier et la transformation inverse des coefficients normalisés.

6. Procédé selon la revendication 1, **caractérisé en ce que** ladite étape de pondération comprend la division de tous les échantillons de signal d'une sous-séquence par l'échantillon de signal le plus grand de ladite sous-séquence.

7. Dispositif pour détecter un filigrane dans un signal, le dispositif comprenant des moyens de calcul (3) pour calculer une corrélation entre une séquence d'échantillons de signal et un filigrane prédéterminé, et un moyen d'application de seuil (4) pour détecter si ladite corrélation dépasse un seuil donné, le dispositif comprenant des moyens de pré-traitement (2) pour pré-traiter ladite séquence d'échantillons de signal, lesdits moyens de pré-traitement comprenant :

- des moyens de division (21) pour diviser la séquence d'échantillons de signal en des sous-séquences ;
- des moyens de pondération (22) pour soumettre tous les échantillons de signal d'une sous-séquence à la même pondération, et pour faire varier ladite pondération d'une sous-séquence à l'autre afin d'obtenir sur la séquence une distribution d'échantillons de signal qui est plus plane que la distribution d'échantillons de signal sur la séquence avant le pré-traitement, tout en conservant les variations originales d'échantillons de signal dans chaque sous-séquence ; et
- des moyens de concaténation (23) pour concaténer les sous-séquences pondérées afin d'obtenir la séquence pré-traitée d'échantillons de signal ;

**caractérisé en ce que** les moyens de division (21) sont conçus pour diviser la séquence d'échantillons de signal originaux en des sous-séquences se chevauchant.

8. Produit à base de programme informatique conçu pour faire en sorte qu'un ordinateur exécutant ledit programme informatique mette en oeuvre le procédé selon l'une quelconque des revendications 1 à 6.

Fig.1

Fig.6

Fig.2

FIG.3

FIG.7

FIG.4

FIG.5